# EUROPÄISCHE PATENTANMELDUNG

(11) **EP 0 590 264 A1**
(43) Veröffentlichungstag der Anmeldung: **06.04.1994**
(21) Anmeldenummer: 93112209.7
(22) Anmeldetag: 30.07.1993
(51) Int. Cl.: G03B 17/56, H01M 2/10

(54) **Batteriefach für eine Kamera**

(30) Priorität: 29.09.1992 DE 9213062 U
(71) Anmelder: Leica Camera GmbH, D-35606 Solms (DE)
(72) Erfinder: Kogler, Hans-Gerhard, D-35578 Wetzlar (DE); Speier, Rolf, D-35435 Wettenberg (DE)
(74) Vertreter: Stamer, Harald, Dipl.-Phys.

(57) **Zusammenfassung**

Das Batteriefach (10) für eine Kamera mit zwei nebeneinanderliegenden Aufnahmekammern (11,11') für Batterien (12,12') weist einen Verpolungsschutz auf, sodaß eine elektrische Kontaktgabe nur bei pol-richtig eingesetzten Batterien erfolgt. Dazu sind Kontaktdrähte (18,18') mit besonderer Formgebung und in besonderer Lage in die Bodenfläche der Aufnahmekammern (11,11') eingesetzt. Außerdem weist eine Aufnahmekammer einen angeformten Absatz (17) im Bereich ihres unteren Randes auf.

## Beschreibung

Die Neuerung betrifft ein Batteriefach für eine Kamera gemäß dem Oberbegriff des Anspruchs 1.

Aus der DE-AS 1232 013 ist ein Batteriemagazin für eine Kamera bekannt, in dem zwei Batterien nebeneinanderliegend angeordnet sind und das schwenkbar im Kameragehäuse gelagert ist. Dem Batteriemagazin ist eine Feder zugeordnet, die das Bestreben hat, dasselbe in einem Magazinraum des Kameragehäuses zu drehen. Mittels eines Griffstückes kann das Batteriefach entgegen der Feder aus dem Magazinraum herausgeklappt werden. Als Batterien sind sogenannte Knopfzellen verwendet, und eine der Batterien dient als Reservebatterie. Ein Schutz gegen falschpoliges Einsetzen der Batterien weist diese bekannte Anordnung nicht auf.

Aus dem DE-GM 1 976 442 ist ein Batteriefach für Kameras bekannt, welches zwei übereinanderliegende Batterien aufnimmt. Damit diese pol-richtig eingesetzt werden, weist ein Aufnahmeraum eine Formgebung auf, die ein pol-richtiges Einsetzen der ersten Batterie erzwingt. Mit der Verschlußvorrichtung für das Batteriefach ist weiterhin ein Taststück verbunden, welches bei geschlossenem Batteriefach im Randbereich der Berührungsstelle zwischen zwei Batterien liegt. In seiner Form ist dieses Taststück derjenigen Umrißform angepaßt, die zwei pol-richtig aufeinanderliegende Batterien an dieser Stelle bilden. Bei nicht pol-richtig eingesetzter zweiter Batterie läßt sich auf diese Weise das Batteriefach nicht schließen.

Der Neuerung liegt die Aufgabe zugrunde, ein Batteriefach der eingangs genannten Art so auszubilden, daß ein pol-richtiges Einsetzen der Batterien in einfacher Weise gewährleistet ist.

In der nachfolgenden Beschreibung eines in der Zeichnung schematisch dargestellten Ausführungsbeispiels ist die Neuerung näher erläutert.
Es zeigen:
- Fig.1: einen (vergrößerten) Längsschnitt durch ein Batteriefach gemäß der Neuerung und
- Fig.2: eine (vergrößerte) Draufsicht mit entferntem Deckel.

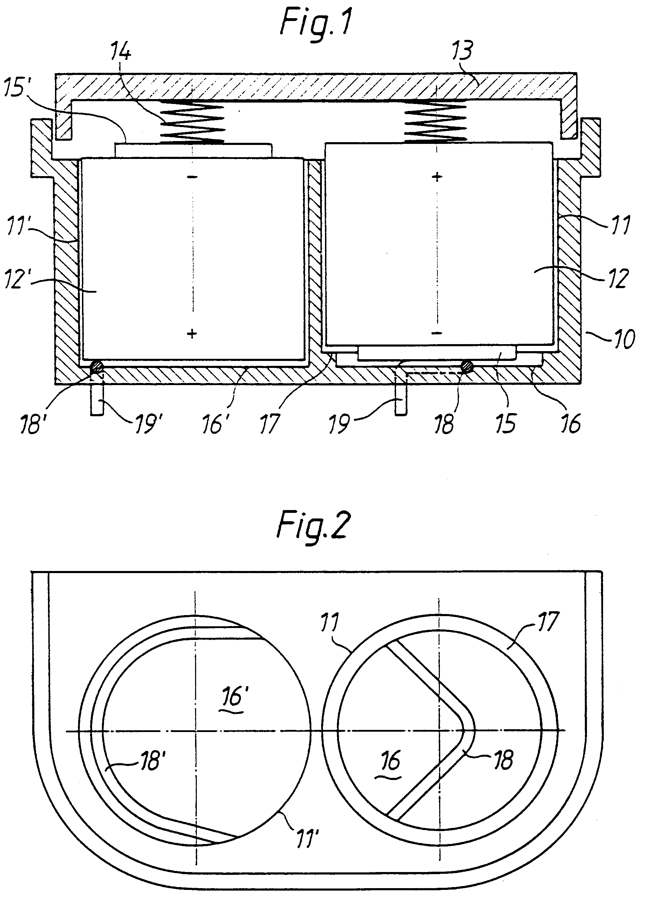

In Fig.1 ist ein Batteriefach 10 dargestellt, das zwei zylindrische Aufnahmekammern 11,11' zum Einsetzen von Batterien 12,12' umfaßt, die durch einen Deckel 13 verschließbar sind. An der Unterseite desselben ist eine Kontaktfeder 14 befestigt, welche die beiden Batterien 12,12' elektrisch verbindet und gleichzeitig Höhenmaßtoleranzen ausgleicht.

In die Aufnahmekammern 11,11' sind die Batterien 12,12' derart eingesetzt, daß der Pluspol der Batterie 12 und der Minuspol der Batterie 12' jeweils an der Kontaktfeder 14 anliegt. Es ist zu sehen, daß der Pluspol jeder Batterie 12,12' eine durchgehend ebene Oberfläche aufweist, während der Minuspol mit je einem Vorsprung 15,15' ausgebildet ist. Die Aufnahmekammer 11 ist im Bereich des Außenrandes ihrer Bodenfläche 16 mit einem angeformten Absatz 17 versehen. Ein Bodenkontakt 18 in Form eines Kontaktdrahtes ist etwa in der Mitte in die Bodenfläche 16 eingesetzt und steht teiweise aus dieser hervor. Die Batterie 12 liegt auf diese Weise mit dem Vorsprung 15 auf dem Bodenkontakt 18 auf, der in einen aus dem Batteriefach 10 hervorstehenden Anschluß 19 endet. Die Aufnahmekammer 11' weist eine im wesentlichen ebene Bodenfläche 16' auf, und ein Bodenkontakt 18' ist im Bereich des Außenrandes der Bodenfläche 16' eingesetzt und steht gleichfalls aus dieser hervor. Dadurch liegt der Pluspol der Batterie 12' mit seiner ebenen Oberfläche auf dem Bodenkontakt 18' auf, dessen Anschluß mit 19' bezeichnet ist.

Es ist leicht zu erkennen, daß nur ein pol-richtiges Einsetzen der Batterien 12, 12' in die Aufnahmekammern 11, 11' die erforderliche Kontaktgabe und damit die Stromversorgung der Kamera sicherstellt. Bei einem falschen Einsetzen liegt die Oberfläche der Batterie 12' mit ihrem Rand auf dem Absatz 17 auf, sodaß keine Berührung mit dem Bodenkontakt 18 stattfindet. Ebenso ist eine Kontaktgabe ausgeschlossen, wenn die Batterie 12 falsch, d.h. mit dem nach unten gerichteten Vorsprung 15 ihres Minuspols in die Aufnahmekammer 11' eingesetzt wird. Der Vorsprung 15 liegt sodann auf der Bodenfläche 16' auf, und aufgrund des randseitig angeordneten Bodenkontaktes 18' findet keine Kontaktgabe statt.

In Fig.2 ist lediglich verdeutlicht, daß die beiden Bodenkontakte 18, 18' als Kontaktdrähte mit unterschiedlicher Formgebung und Lage in die Bodenflächen 16, 16' eingesetzt sind. Der Bodenkontakt 18 ist etwa rechtwinklig und der Bodenkontakt 18' annähernd halbkreisförmig ausgebildet. Auf diese Weise liegt der Bodenkontakt 18' im Bereich des Außenrandes der Bodenfläche 16', während der Bodenkontakt 18 etwa durch die Mitte der Bodenfläche 16 verläuft. Das Batteriefach 10 ist mit Vorteil aus Kunststoff im Spritzgußverfahren hergestellt, wodurch der Ansatz 17 in einfacher Weise angeformt werden kann.

## Patentansprüche

1. Batteriefach für eine Kamera mit zwei nebeneinanderliegenden, zylindrischen Aufnahmekammern für Batterien und einem ver- und entriegelbaren Deckel, dadurch gekennzeichnet, daß die eine Aufnahmekammer (11') mit einem im Bereich des Außenrandes ihrer Bodenfläche (16') und die andere (11) mit einem im mittleren Bereich ihrer Bodenfläche (16) angeordneten Bodenkontakt (18,18') versehen ist, wobei die den randseitigen Bodenkontakt (18') aufweisende Bodenfläche (16') eben ausgebildet und die andere (16) randseitig mit einem angeformten Absatz (17) versehen ist, und daß an der Innenseite des Deckels (13) eine Kontaktfeder (14) für die Batterien (12,12') befestigt ist.

2. Batteriefach nach Anspruch 1, dadurch gekennzeichnet, daß die Bodenkontakte (18,18') als in die Bodenflächen (16,16') eingesetzte Kontaktdrähte unterschiedlicher Form ausgebildet sind.

3. Batteriefach nach Anspruch 1 und 2, dadurch gekennzeichnet, daß der der ebenen Bodenfläche (16') zugeordnete Bodenkontakt (18') halbkreisförmig und der andere (18) rechtwinklig ausgebildet ist.

4. Batteriefach nach einem oder mehreren der vorhergehenden Ansprüche, dadurch gekennzeichnet, daß das Batteriefach (10) und der Deckel (13) jeweils einstückig ausgebildet und aus Kunststoff im Spritzgußverfahren gefertigt sind.
